# FASCICULE DE BREVET EUROPEEN

(11) **EP 1 100 343 B1**
(45) Date de publication et mention de la délivrance du brevet: **07.04.2004**
(21) Numéro de dépôt: 99934812.1
(22) Date de dépôt: 29.07.1999
(51) Int. Cl.: A23G 1/02, A23B 9/02, A23B 9/08

(54) **PROCEDE DE STERILISATION D'UN PRODUIT ALIMENTAIRE A FAIBLE TENEUR EN EAU, PRODUIT ALIMENTAIRE OBTENU ET COMPOSITION ALIMENTAIRE LE CONTENANT**
STERILISIERUNGSVERFAHREN FÜR NAHRUNGSMITTEL MIT NIEDRIGEM WASSERGEHALT, SO HERGESTELLTEN PRODUKTEN UND SIE ENTHALTENDE ZUSAMMENSETZUNGEN
METHOD FOR STERILISING A FOOD PRODUCT WITH LOW WATER CONTENT, RESULTING FOOD PRODUCT AND FOOD COMPOSITION CONTAINING SAME

(30) Priorité: 31.07.1998 FR 9809847
(43) Date de publication de la demande: 23.05.2001
(73) Titulaire: COMPAGNIE GERVAIS DANONE, 92300 Levallois Perret (FR)
(72) Inventeur: FUHRMANN, Benoît, F-78690 Les Essarts-le-Roi (FR); RABAULT, Jean-Luc, F-91650 Breuillet (FR)
(74) Mandataire: Warcoin, Jacques
(86) Numéro de dépôt international: PCT/FR1999/001878
(87) Numéro de publication internationale: WO 2000/007456

(56) Documents cités:
- EP-A- 0 012 255
- EP-A- 0 111 614
- EP-A- 0 337 249
- EP-A- 0 338 121
- EP-A- 0 352 939
- EP-A- 0 615 692
- EP-A- 0 770 332
- EP-A- 0 792 590
- EP-A- 0 832 567
- US-A- 4 039 689
- US-A- 5 296 253
- US-A- 5 368 873
- US-A- 5 451 419
- US-A- 5 773 070
- PATENT ABSTRACTS OF JAPAN vol. 013, no. 388 (C-630), 28 août 1989 (1989-08-28) & JP 01 137960 A (HOUSE FOOD IND CO LTD), 30 mai 1989 (1989-05-30)

## Description

La présente invention concerne un procédé de stérilisation d'un produit alimentaire à faible teneur en eau, naturellement ou artificiellement contaminé. Elle concerne également les produits alimentaires essentiellement stériles obtenus et les compositions alimentaires contenant lesdits produits alimentaires.

Certains ingrédients et aliments à faible teneur en eau, définis par une activité de l'eau Aw < 0.60, d'intérêt nutritionnel, organoleptique ou technologique, peuvent entrer dans la composition de produits alimentaires. Ce sont par exemple du chocolat, des sucres (saccharose ou autres), des fruits secs (noisettes, amandes...), des fruits séchés (bananes chips...), des biscuits ou autres produits céréaliers, des poudres (lait et dérivés, mélanges d'ingrédients pulvérulents...), des épices...

Ces ingrédients non stériles peuvent altérer la qualité marchande et hygiénique des produits finis. Par exemple, l'adjonction de chocolat peut contaminer le produit fini, notamment par des bactéries sporulées ; de même pour l'adjonction de sucre ou de noisettes à un produit frais ne supportant pas une stérilisation finale.

On connaît de nombreux procédés de stérilisation de compositions alimentaires aqueuses, notamment à base de lait, permettant d'atteindre la stérilité requise.

Toutefois lorsque ces compositions aqueuses contiennent des composés qui par nature sont contaminés, notamment le chocolat, les bactéries présentes dans les particules solides, au contact de l'eau, se développent ce qui conduit à la contamination de la composition aqueuse et affecte la stabilité microbiologique de celle-ci.

Dans le cas du chocolat, cet inconvénient est d'autant plus important que cet ingrédient constitue un additif majeur souvent associé aux compositions alimentaires.

C'est la raison pour laquelle des procédés ont déjà été proposés afin d'assurer la stérilisation du chocolat.

Le brevet européen EP-B-615 692 décrit par exemple un procédé de stérilisation de chocolat par chauffage à une température entre 110 et 130°C pendant 10 à 30 minutes. Ce procédé ne permet de stériliser le chocolat qu'en raison de la faible teneur en sucre (< 10%). De même, la demande de brevet européen EP-A-770 332 décrit un procédé de stérilisation similaire dans lequel la masse de chocolat est chauffée à une température voisine de 125°C pendant 5 à 10 minutes.

Le brevet européen EP A 111 614 décrit un procédé d'amélioration et de standardisation de la poudre de cacao de mauvaise qualité par ajout de 5 à 20 % en poids d'eau, stérilisation à une température de 100-110°C et à une pression égale à la pression atmosphérique ou légèrement supérieure puis séchage dans une atmosphère stérile pour obtenir un produit contenant de 2 à 5 % d'eau.

Cependant, de tels procédés ne conduisent qu'à une stérilisation limitée de l'ordre de log 2, c'est-à-dire que la quantité de microorganismes contaminants, notamment en bactéries sporulées, est diminuée par 100 seulement.

En outre, les technologies classiques de traitement thermique antimicrobien peuvent modifier les qualités nutritionnelles, organoleptiques ou technologiques des aliments et ingrédients traités. De plus, certains microorganismes (notamment les bactéries sporulées) en environnement protecteur (par exemple faible Aw, forte teneur en matière grasse) nécessitent des conditions de traitement thermique peu compatibles avec les réalités industrielles.

Ces dernières années, de nouveaux procédés ont été étudiés, tels que les très hautes pressions, les champs électriques pulsés, le chauffage ohmique, l'ionisation, l'infrarouge, l'ultraviolet, les ultrasons...

Ces procédés sont aussi limités sur les ingrédients secs, le compromis entre efficacité antimicrobienne et le maintien des qualités organoleptiques n'étant pas toujours satisfaisant.

La contamination minimum proposée chez les foumisseurs d'ingrédients secs est de l'ordre de 100 UFC/g. Avec 2 log de réduction maximum, l'état de l'art en matière d'assainissement est d'environ 1 UFC/g. Ceci est incompatible avec une utilisation dans des compositions alimentaires aqueuses, d'autant plus que leur Aw est élevée.

Il est donc souhaitable de proposer un autre procédé de stérilisation qui permette de diminuer de façon beaucoup plus importante la quantité de microorganismes dans les ingrédients et aliments "secs" , notamment le chocolat tout en préservant les qualités organoleptiques.

En résumé, pour être retenu, un procédé de stérilisation doit répondre à certains critères :
- maintien de l'intérêt nutritionnel, organoleptique ou technologique de l'ingrédient traité
- réduction satisfaisante de la flore microbienne (levures, moisissures, bactéries végétatives et sporulées...) par rapport aux besoins de conservation des produits finis pendant toute leur durée de vie normale
- compatibilité alimentaire du procédé et des éléments entrant dans ce traitement,
- coût en accord avec la valeur du produit fini
- possibilité d'industrialisation...

L'invention concerne en premier lieu un procédé de stérilisation d'un produit alimentaire à faible teneur en eau, naturellement ou artificiellement contaminé, caractérisé en ce que l'on élève l'activité de l'eau (Aw) dudit produit alimentaire à une valeur supérieure à 0,7 de préférence supérieure à 0,8, en ce que l'on soumet le produit alimentaire hydraté à une étape de stérilisation thermique et en ce que l'on élimine l'eau de manière à récupérer un produit alimentaire à faible teneur en eau essentiellement stérile, qui présente une contamination, notamment en bactéries sporulées, au moins 1000 fois inférieure (3 log) au produit contaminé de départ, notamment inférieure à 1 UFC/g.

De préférence, on élève l'activité de l'eau à une valeur supérieure à 0,87, notamment entre 0,9 et 0,96.

De préférence, on réalise tout ce procédé par batch dans la même cuve.

Selon l'Aw, la température et la durée du traitement thermique, l'invention permet notamment d'obtenir une réduction des microorganismes, comprise entre 3 et 12 log (1000 à 10¹² fois moins), en particulier entre 3 et 9 log, et de préférence d'au moins 5 log sur les bactéries sporulées avantageusement d'au moins 6 log. En tenant compte de la contamination initiale des ingrédients (100 à 10 000 sporulées par gramme environ), cela permet d'obtenir un produit "essentiellement stérile" contenant moins de 1 UFC/g, de préférence moins de 1 UFC/100g et de préférence moins de 1 UFC/kg.

L'activité de l'eau d'un produit est une notion qui est bien connue dans le domaine alimentaire, cette grandeur, en abrégé Aw, mesure la disponibilité de l'eau dans un échantillon. Dans la plupart des cas, cette activité de l'eau n'est pas proportionnelle à la teneur en eau du produit.

A titre d'exemple, un yoghourt aux fruits comporte 82 % d'eau et possède une Aw égale à 0,99 ; le fromage frais maigre contient 87 % d'eau et possède une Aw égale à 0,99.

Les méthodes permettant la mesure de l'Aw d'un produit sont connues de l'homme du métier. L'Aw est généralement mesurée à 25°C.

L'invention concerne plus particulièrement la stérilisation des produits dont l'Aw est inférieure à environ 0,6 et notamment de l'ordre d'environ 0,4; on peut citer le chocolat ou analogue ; les fruits secs ; les sucres, les fruits séchés, les biscuits ou autres produits céréaliers, les poudres (laits et dérivés, mélanges d'ingrédients pulvérulents) et les épices.

Un des avantages du procédé selon l'invention est de diminuer très fortement la contamination par les bactéries sporulées. On sait en effet que les procédés de pasteurisation classiques permettent d'éliminer les bactéries végétatives et non les bactéries sporulées.

Par analogue du chocolat, on entend toutes masses grasses de confiserie contenant une phase grasse continue constituée d'une ou plusieurs matières grasses d'origine végétale ou animale et dont les propriétés sont soit similaires à celles du beurre de cacao (appelées généralement pâtes à glacer ou « compound »), soit plastiques à 20°C (pâtes à tartiner, fourrages gras et pralinés).

On pourra également remplacer le sucre (saccharose) par un agent sucrant bien connu du type polyol ou acesulfame K. Les solides non gras du cacao qui ont été remplacés au moins en partie par des constituants usuels en confiserie chocolaterie sont également compris dans la définition « analogues du chocolat ».

Le procédé selon l'invention sera particulièrement adapté au traitement du chocolat noir. Celui-ci est défini légalement et comprend généralement au moins 30 % de cacao (sous forme de cacao sec et dégraissé et/ou de beurre de cacao), dont au moins 2,5 % de cacao sec et dégraissé; la quantité de lait en poudre est inférieure ou égale à 5 %.

Mais l'invention est également adaptée à l'obtention de différentes sortes de chocolat au lait ou de chocolat blanc, essentiellement stériles. On sait par exempte que le chocolat blanc contient généralement 30 à 35 % de beurre de cacao, mais ne contient pas de cacao sec et dégraissé.

Pour hydrater, le produit à faible teneur en eau selon l'invention afin d'atteindre l'Aw cible, on ajoute l'eau nécessaire soit entièrement au départ, soit en partie au départ et en partie lors du chauffage jusqu'à la température de stérilisation du produit, soit uniquement lors du chauffage. Cet ajout d'eau lors du chauffage se fera de préférence par l'injection directe de vapeur de qualité alimentaire dans le produit.

L'eau peut être ajoutée pure, ou via des composés aqueux, tels que par exemple le lait (écrémé ou non, concentré ou non), la crème ou d'autres dérivés laitiers, des jus de fruits.

L'Aw est mesurée de la façon suivante et est appelée Aw équivalente :

Dans un mélangeur de laboratoire adapté, on ajoute au produit à faible teneur en eau la proportion d'eau correspondant à l'humidité totale qui sera ajoutée à la fin du palier de stérilisation (eau ajoutée + vapeur condensée). On agite 15 min à 50°C en évitant toute évaporation et on laisse reposer à 20 °C en flacon clos contenant peu d'espace de tête. Après 24 heures, le produit est réduit en fine poudre ou est mélangé (selon sa consistance) et on mesure son Aw à 25°C sur un appareil classique de type Aqualab CX-2 ou Decagon.

Dans le cas particulier des produits en morceaux (noisettes hachées...) le début de cette procédure est adapté : l'eau est ajoutée par injection de vapeur pour une meilleure répartition, et on agite 1 heure à 50°C ; puis, on termine la procédure comme ci-dessus.

Dans le cas des produits autres que le chocolat ou analogue du chocolat l'augmentation de l'activité de l'eau s'effectue par simple hydratation par la phase aqueuse.

Pour le sucre dont l'activité de l'eau est inférieure à 0,3 ou les fruits secs dont l'activité de l'eau est inférieure à environ 0,6, on effectue le mélange en proportion appropriée pour obtenir une Aw à 25°C supérieure à environ 0,7, avantageusement supérieure à 0,8, de préférence supérieure à 0,87. Les fruits secs très gras, qui absorbent peu d'eau, peuvent de préférence baigner dans un excès d'eau, qui sera ensuite drainé après la stérilisation et avant évaporation.

Par contre on connaît l'incompatibilité de l'eau avec le chocolat car l'eau augmente la viscosité de celui-ci de façon exponentielle jusqu'à le rendre solide. En fait, la viscosité du chocolat augmente jusqu'à un pic puis diminue selon sa teneur en eau. On constate ce phénomène aussi bien au cours de l'hydratation du chocolat que de sa déshydratation. Ce pic rhéologique est aussi nettement moins fort sur du chocolat que sur la pâte de cacao.

De manière inattendue, on a trouvé que la modulation de la teneur en matière grasse permet d'éviter une viscosité trop importante lors de l'hydratation ou de la déshydratation. En effet, l'intensité du pic rhéologique est aussi corrélée avec la teneur en matière grasse du chocolat ou analogue. Pour des teneurs en matière grasse normales à élevées, la viscosité du mélange eau + chocolat diminue avec l'augmentation de la teneur en matière grasse. Pour de faibles teneurs en matière grasse, la texture du mélange de l'eau et du chocolat n'est plus une pâte liquide mais une poudre.

Pour une même quantité d'eau ajoutée, par exemple 10 %, le Mélange chocolat + eau peut donc prendre différentes textures, en fonction de la matière grasse du chocolat sec : si la matière grasse est comprise entre 28 et 48 %, le mélange est une pâte très visqueuse, quasi solide ; pour une matière grasse inférieure à 28 %, le produit a plutôt la consistance d'une poudre, plus facile à mélanger ; si la matière grasse est supérieure à 48 %, le mélange reste très fluide.

C'est pourquoi, selon une première variante préférée le chocolat soumis à l'étape d'hydratation comprend au moins 48 % de matière grasse, de préférence entre 48 % et 90 %, notamment entre 48 % et 70 % de matière grasse.

Selon une seconde variante, on a trouvé qu'un chocolat ou analogue de chocolat dont la proportion de matière grasse est inférieure à 28 % permettait également d'atteindre l'objectif fixé. De préférence, selon cette variante le chocolat ou analogue de chocolat comprend entre 20 % et 28 % de matière grasse.

Il sera la plupart du temps souhaitable dans ce dernier cas de rajouter en fin de procédé le pourcentage de matière grasse stérilisée requis pour récupérer un chocolat de composition classique.

Ainsi selon une variante préférée, le procédé de stérilisation d'un produit alimentaire à faible teneur en eau est caractérisé en ce que l'activité de l'eau du chocolat ou analogue est élevée à une valeur supérieure à environ 0,87 par malaxage d'un chocolat ou analogue contenant environ moins de 28% en poids de matière grasse ou par malaxage d'un chocolat ou analogue contenant environ plus de 48 % en poids de matière grasse avec une phase aqueuse de façon à obtenir une pâte homogène.

Il est également possible de réaliser l'hydratation en mélangeant une masse de chocolat ou analogue dans une base émulsionnée eau-dans-l'huile formée d'une matière grasse, d'un émulsifiant et d'eau comme ceci est décrit dans la demande de brevet EP-A-832 567.

Une fois le produit hydraté obtenu, on procède de préférence à un dégazage puis à une étape de stérilisation à une température généralement comprise entre 100 et 150°C, pendant un temps approprié, notamment 1 à 10 minutes.

Selon l'un des aspects de l'invention, l'hydratation se fait en ajoutant en une seule fois toute la quantité d'eau nécessaire pour atteindre l'Aw cible.

Le chauffage pour la stérilisation se fera de préférence par injection directe de vapeur de qualité alimentaire. C'est la somme de l'eau ajoutée au début et de la vapeur condensée pendant le chauffage qui contribue à augmenter l'Aw. La quantité de vapeur injectée dans le produit sera de préférence mesurée par un débitmètre massique.

Selon l'un des modes de réalisation de l'invention, le produit hydraté et dégazé sera avantageusement chauffé, avant la stérilisation, pendant 10 minutes à 80°C, puis de 20 à 60 minutes entre 30 et 37°C, notamment pour favoriser la distribution homogène de l'Aw dans le produit, ce qui améliorera l'efficacité de la stérilisation, surtout si elle se fait sans injection de vapeur, ou aussi dans le cas de morceaux.

L'homme du métier adaptera la valeur de l'Aw, de la température et de la durée du traitement, en fonction des ingrédients, de la nature de la contamination et du matériel. On peut obtenir le même niveau de stérilisation avec une combinaison différente de ces paramètres. Par exemple, si l'on augmente l'Aw du produit à stériliser, on peut réduire le couple temps/température. Pour des produits plus résistants, le traitement peut être effectué à une Aw proche de 0,65. De manière générale, pour une Aw de 0,7 à 0,8, le procédé implique le traitement à 125-130°C pendant 4 minutes à 1,8 h (de préférence pendant 5 à 30 minutes), ou à une température de 145-150°C pendant environ 30 secondes à 5 minutes, notamment de 30 à 60 secondes, de préférence 1 à 5 minutes.

La durée de stérilisation est généralement comprise entre 15 secondes et 4 min, pour une température d'environ 125 à 135°C et une Aw supérieure à 0,9. Les durées seront plus grandes pour les ingrédients gras (chocolat, noisettes ..) comparés aux produits non gras (sucre ...), car la matière grasse rend les microorganismes plus thermorésistants.

Certains ingrédients, comme les sucres peuvent supporter des durées importantes à basse température ; d'autres comme le chocolat seront de préférence traités au-dessus de 120°C, pendant un temps plus court.

De préférence, on stérilisera la chocolat par batch, avec une Aw équivalente de 0.82 à 0.95, en chauffant par injection directe de vapeur de qualité alimentaire depuis 50°C jusqu'à 125-135°C, avec maintien pendant 2 à 8 min à cette température. De préférence, l'injection de vapeur sera précédée d'un dégazage poussé (-0.95 bar environ).

L'eau est ensuite éliminée, de préférence, par évaporation sous vide à une température appropriée, notamment de l'ordre de 80°C.

Au cours de la déshydratation, la viscosité de la pâte de chocolat ou analogue hydratée varie selon la teneur en matière grasse. Pour une teneur en matière grasse supérieure à 48 %, la viscosité à 40°C mesurée selon la méthode de Casson sur un viscosimètre Haake VT500 ne dépasse pas environ 15 Pa.s quelle que soit la teneur en eau ajoutée. Dans le cas d'un chocolat ou analogue comprenant moins de 28 % de matière grasse, on obtient une poudre et non pas une pâte visqueuse.

Le procédé peut être appliqué à un chocolat ou analogue comprenant 28 à 48 % de matière grasse. Cependant, à ces teneurs en matière grasse, la viscosité mesurée au pic rhéologique est supérieure à 20 Pa.s et devient le plus souvent infinie (produit solide). Dans ce cas, il faudra un mélangeur plus puissant et cisailler pour éviter la prise en masse lors de la déshydratation, surtout si on a ajouté beaucoup d'eau.

Lors de cette évaporation on observe une cristallisation des sucres qui peuvent former des agglomérats avec les particules de cacao et de lait. De préférence, les particules, en particulier les cristaux de sucre, ne devraient pas avoir une taille supérieure à 30 micromètres.

On notera que le procédé est notamment remarquable dans le cas du chocolat ou analogue du chocolat selon la première ou seconde variante par le fait qu'il exige des proportions de matière grasse situées en dehors des teneurs habituelles.

Il est bien entendu possible par la suite de réadapter les teneurs en matière grasse afin d'obtenir les chocolats ou analogues du chocolat classiques.

Les produits obtenus présentent un profil organoleptique sensiblement similaire aux produits standards et notamment ne présentent pas le goût de « brûlé » obtenu lorsqu'on effectue la stérilisation selon un procédé classique.

En fonction des paramètres choisis, notamment Aw, température, durée, les produits stérilisés obtenus présentent une réduction des microorganismes comprise entre 3 log et 12 log, le plus souvent entre 3 et 9 log, et de préférence d'au moins 5 log sur les bactéries sporulées.

En d'autres termes, ces produits présentent une contamination inférieure à 1 UFC/g, de préférence inférieure à 1 UFC/100 g, avantageusement inférieure à 1 UFCI kg.

L'invention concerne également un produit alimentaire, issu d'un produit alimentaire à faible teneur en eau, contaminé par des microorganismes, caractérisé en ce qu'il est essentiellement stérile, en ce qu'il est susceptible d'être obtenu par le procédé décrit précédemment et en ce qu'il présente une contamination, notamment en bactéries sporulées, au moins 1000 fois inférieure audit produit alimentaire naturellement ou artificiellement contaminé de départ, inférieure à 1 UFC/g, de préférence inférieure à 1 UFC/100 g et avantageusement inférieure à 1 UFC/ kg.

Selon une variante, ce produit alimentaire est du chocolat ou un analogue du chocolat.

L'invention est remarquable également en ce que le chocolat ou analogue de chocolat peut se présenter sous la forme de morceaux (pépites...), notamment d'une grosseur supérieure à 4 mm, ce qui permet aux consommateurs notamment lorsque ces morceaux sont incorporés dans une composition alimentaire, de reconnaître et d'apprécier le goût du chocolat.

Selon l'un des modes de réalisation de l'invention, les morceaux de chocolat ou analogue forment une couche discontinue, de largeur supérieure à 2 cm et d'épaisseur inférieure à 5 mm.

On remarquera également que le chocolat ou analogue de chocolat selon l'invention présente une teneur en sucre suffisante pour permettre d'éviter le goût amer inhérent au cacao.

Une composition typique de chocolat ou analogue de chocolat selon l'invention comprend :
- cacao sec et dégraissé 0 à 35 %
- beurre de cacao ou matière grasse 20 à 90 %
- sucre ou analogue 10 à 65 %
- lait en poudre écrémé ou non 0 à 30 %.

Comme tout chocolat ou analogue, elle peut aussi comprendre des arômes et un ou plusieurs émulsifiants tels que la lécithine ou le PGPR (ou Polyricinoléate de Polyglycérol) notamment.

Une composition typique de chocolat noir classique comprend en pourcentage en poids:
- cacao sec et dégraissé 15 à 35 %
- beurre de cacao 28 à 43 %
- sucre ou analogue 23 à 60 %
- lait en poudre < 5 %

Une composition typique d'un chocolat de couverture comprend :
- cacao sec et dégraissé 2,5 à 30 %
- beurre de cacao 31 à 43 %
- sucre ou analogue 27 à 65 %
- lait en poudre < 5 %

Une composition typique de chocolat au lait comprend en pourcentage en poids:
- cacao sec et dégraissé 2,5 à 7 %
- beurre de cacao 28 à 36 %
- sucre ou analogue 40 à 50 %
- lait en poudre 14 à 21 %

Une composition typique de chocolat blanc comprend en pourcentage en poids:
- beurre de cacao 21 à 30 %
- sucre ou analogue 40 à 60 %
- lait en poudre 14 à 30 %.

L'invention concerne également une composition alimentaire formée d'une phase aqueuse notamment continue, notamment une base laitière, et de produits alimentaires stériles tels que définis ci-dessus notamment du chocolat ou analogue de chocolat en mélange ou en morceaux.

Par l'expression "morceaux de chocolat ou analogue de chocolat" on entend des particules solides dont la granulométrie est suffisante pour leur conférer le goût de chocolat caractéristique de cette substance. Ces particules se différencient donc des charges de taille plus faible qui sont déjà utilisées à base de chocolat, et qui ont été stérilisées de telle manière que le goût a été profondément modifié, et qui ne sont présentes qu'aux fins de donner à la composition une apparence chocolatée. Ces charges ne pourraient avoir la taille de « morceaux » puisque dans ce cas le goût désagréable serait perceptible par le consommateur.

L'invention concerne particulièrement les compositions alimentaires à pH « neutre » ou faiblement acide, notamment les desserts, dans lesquelles une contamination bactérienne, notamment en sporulées peut se développer. En effet, il s'agit d'un avantage remarquable des compositions selon l'invention de préserver la stabilité microbiologique alors que la zone de pH est propice aux développements des microorganismes. Ce développement de bactéries sporulées est en revanche très difficile dans les produits acides.

Ces compositions alimentaires présentent en outre une activité de l'eau supérieure à 0,80, avantageusement 0,85 ou mieux 0,90, limites en deçà desquelles les bactéries ne peuvent se développer.

Il s'agit notamment de compositions à base de produit laitier frais éventuellement foisonné, sous forme d'une émulsion huile dans l'eau et qui contiennent en outre une ou plusieurs matières grasses d'origine laitière ou d'origine animale, un ou plusieurs sucres et un ou plusieurs émulsifrants.

On peut également utiliser des matières grasses d'origine végétale hydrogénée ou non.

La composition pourra également comprendre de la poudre de lait.

On donne ci-après un exemple de crème dessert conforme à l'invention :
- lait frais 70 à 85 %
- lait en poudre 0 à 5 %
- MGLA 0 à 2 %
- sucre 4 à 12 %
- agents de texture < 2,5 %
- caramel < 10 %
et 1 à 30 % de particules solides stérilisées comme décrit ci-dessus par rapport à la base laitière.

Le taux d'extrait sec est avantageusement compris entre 0,20 à 0,34 et présente une Aw d'environ 0,98. Le pH est compris entre 6 et 7.

Les produits stérilisés, en particulier le chocolat ou les analogues de chocolat selon l'invention, sont également adaptés à la préparation de mousse à pH neutre.

La composition alimentaire peut également être enrobée de manière connue.

Les exemples ci-après illustrent l'invention.

### Exemples 1 à 6 : Fabrication de chocolat essentiellement stérile

Dans un mélangeur thermostaté on ajoute les ingrédients suivants : eau, pâte de cacao, sucre, beurre de cacao désodorisé, éventuellement lait en poudre à 26 % de matière grasse, lait en poudre à 0 % de matière grasse, crème à 40 % de matière grasse.

On réunit dans le tableau les compositions préparées (exemples 1 à 6).

| Exemples | 1 | 2 | 3 | 4 | 5 | 6 |
|---|---|---|---|---|---|---|
| eau | 34.0 | 29.6 | 34.0 | 28.6 | 30.3 | 26.5 |
| pâte de cacao | 17.0 | 12.4 | 9.7 | 9.7 | 7.0 | 7.0 |
| sucre | 40.0 | 29.7 | 33.5 | 33.4 | 24.4 | 24.4 |
| beurre de cacao désodorisé | 9.0 | 28.3 | 8.8 | 8.8 | 28.4 | 28.4 |
| lait poudre 26 % MG | | | 14.0 | | 9.9 | |
| lait poudre 0 % MG | | | | 10.4 | | 7.3 |
| crème 40 % MG | | | | 9.1 | | 6.4 |
| TOTAL | 100.0 | 100.0 | 100.0 | 100.0 | 100.0 | 100.0 |
| MG % / MS | 27.6 | 49.8 | 27.0 | 27.0 | 50.1 | 50.1 |
| H2O % | 34.0 | 29.6 | 34.4 | 34.4 | 30.6 | 30.6 |
| Aw départ | 0.90 | 0.90 | 0.88 | 0.88 | 0.90 | 0.90 |

Les compositions de chocolat de départ contiennent moins de 1% d'eau et présentent une Aw inférieure à 0,6. Les ingrédients sont notamment contaminés par des bactéries sporulées de type Bacillus, environ 10-10 000 UFC/g, typiquement 500 UFC/g pour la pâte de cacao et le lait.

On fond et mélange les ingrédients entre 40°C et 50°C maximum pour éviter la mousse au dégazage. Le sucre est complètement dissous.

On soumet les mélanges à un vide poussé inférieur à -0,09 MPa (-0,9 bar) pour dégazer, ce qui facilite la stérilisation au coeur des. ingrédients, évite l'oxydation des matières grasses pendant la chauffe et la formation de mousse lors de l'évaporation.

On préchauffe rapidement à 100°C par la double enveloppe et on injecte directement de la vapeur de qualité alimentaire directement dans le produit jusqu'à 127°C, puis on arrête l'injection et on maintient le produit à cette température pendant 1 à 4 min : ceci permet ainsi la stérilisation sous pression, sans évaporation d'eau.

L'Aw augmente au-dessus de 0,90 lors de l'injection de vapeur. L'Aw équivalente est alors d'environ 0,95.

On refroidit rapidement à 85°C par la double enveloppe ou par mise sous vide pour stopper l'évolution aromatique, on observe une réduction de 6 log (base 10) soit 1 000 000 de fois.

Puis on évapore l'eau du produit par chauffage par la double enveloppe sous un vide d'environ -0,09 MPa (-0,9 bar) jusqu'à une teneur en eau inférieure à 1 % ou Aw < 0,30, puis on refroidit à 45°C.

Pour les exemples 1, 3 et 4 (27 % de matière grasse, on ajoute le solde de beurre de cacao stérilisé, pour obtenir la teneur en matière grasse souhaitée.

Selon la taille souhaitée des cristaux de sucre, on soumet, pendant l'évaporation et le refroidissement, la composition stérile à un cisaillement très fort, par exemple avec un broyeur colloïdal, pour limiter la taille des cristaux de 30 à 60 µm. Ce qui constitue une variante préférée.

Dans une autre variante, le mélangeur est moins cisaillant et les particules plus grosses, notamment supérieures à 30 µm doivent être broyées de façon stérile, par exemple avec un broyeur à billes.

Les chocolats ainsi obtenus présentent un profil organoleptique similaire au chocolat classique sans goût de brûlé et une contamination microbienne inférieure à 1 UFC/kg de chocolat, correspondant à une réduction de 6 log aussi bien en contamination naturelle qu'après ensemencement artificiel en Bacillus subtilis.

Toutes ces opérations peuvent être réalisées par batch dans un mélangeur, ou en continu (par exemple, stérilisation par échangeur de chaleur à surface raclée, puis séchage sous vide en couche mince), ou par une combinaison des deux (par exemple, stérilisation en continu par échangeur de chaleur à surface raclée, puis évaporation sous vide par batch).

### Exemple 7 : réduction de la flore microbienne du sucre

Le sucre contient moins de 1% d'eau et son Aw est < 0.3. Il est notamment contaminé par des bactéries sporulées de type Bacillus, environ 5 à 50 UFC/g, typiquement 15 UFC/g.

On mélange à 50°C du sucre et de l'eau pour obtenir une Aw 25°C > 0.90 et on dégaze.

On traite thermiquement sous pression 1 à 4 mn / 127°C puis on évapore en apportant de l'énergie sous vide à environ -0,09 MPa (-0.9 bar) jusqu'à un Aw < 0.3 et on cristallise le sucre (une partie pouvant rester amorphe. Conditionnement «ultra-propre».

Le chauffage par double enveloppe est peu efficace pour les pulvérulents : dans une variante préférée, on utilisera donc une cuve avec générateur de micro-ondes pour fournir l'énergie d'évaporation, tout en restant sous vide.

Le sucre obtenu retrouve ses caractéristiques de départ, notamment une Aw < 0.3, avec une granulométrie pouvant être modifiée vis à vis du standard ; sa contamination microbienne est alors inférieure à 1 UFC / 1000 g de sucre.

Toutes ces opérations peuvent être réalisées par batch dans un mélangeur, ou en continu (par exemple, stérilisation par échangeurs à plaques, puis séchage sur tour spray avec air filtré stérile; finition éventuelle sur sécheur à lit fluidisé).

### Exemple 8 : réduction de la flore microbienne de fruits secs (noisettes. amandes...)

Les fruits secs, torréfiés ou non, contiennent moins de 7% d'eau et leur Aw est < 0.6. Ils sont notamment contaminés par des bactéries sporulées de type Bacillus, environ 5 à 50 UFC/g.

On mélange à 50°C des fruits secs entiers, concassés ou en pâte et de l'eau pour obtenir une Aw25°C > 0.90 et on dégaze. Dans une variante, les fruits en morceaux baignent dans un excès d'eau. On Traite thermiquement 1 à 4 mn / 127°C sous pression, de préférence par injection directe de vapeur de qualité alimentaire.

On draine l'eau libre (pour les fruits en morceaux) puis on évapore en apportant de l'énergie sous vide à environ -0,09 MPa (-0.9 Bar) pour sécher jusqu'à une Aw < 0.3).

Conditionnement «ultra-propre».

Les fruits secs obtenus retrouvent leurs caractéristiques de départ, notamment leur croquant (qui peut même être amélioré si on les a plus séchés qu'au départ) et une Aw < 0.6, avec une granulométrie pouvant être modifiée vis à vis du standard ; la contamination microbienne est alors inférieure à 1 UFC /kg.

Toutes ces opérations peuvent être réalisées par batch dans un mélangeur.

### Exemple 9 : Réduction de la flore microbienne de chocolat au lait Le chocolat de départ a la composition suivante :

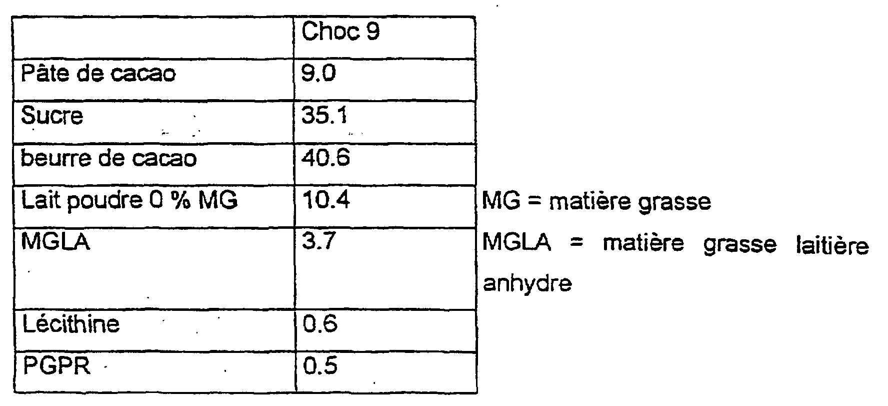

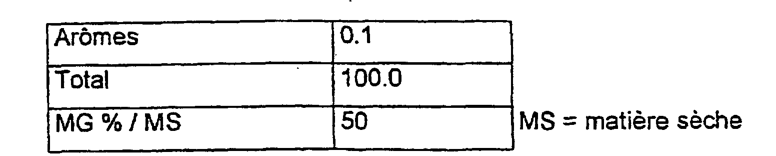

Sa teneur en eau est < 0,5 % et son Aw = 0.3.

On le contamine artificiellement par des spores d'une souche de Bacillus subtilis isolée du cacao. Les spores lyophilisées sont dispersées de façon homogène dans le chocolat fondu à 50°C.

Le procédé est réalisé dans un mélangeur de conception stérile, résistant à la pression et à la mise sous vide, équipé d'une double enveloppe, d'un mélangeur à ancre raclant les parois et d'un broyeur colloïdal.

On mélange intimement le chocolat à 50°C avec 15 % d'eau. On dégaze par mise sous vide (-0,95 bar).

On chauffe rapidement par la double enveloppe jusqu'à 95°C et on maintient 8 minutes. On chauffe alors sous pression par injection directe de vapeur de qualité alimentaire jusqu'à 126°C, puis on arrête l'injection et on maintient le produit 3 minutes à cette température pour stériliser. L'Aw équivalente du chocolat lors de la stérilisation est 0.82.

On évapore l'eau sous un vide de -0.95 bar en apportant de l'énergie par la double enveloppe, jusqu'à retrouver l'Aw et l'humidité de départ, puis on refroidit à 50°C. Pendant l'évaporation et/ou le refroidissement, on broie les agglomérats qui se forment grâce au broyeur colloidal : on obtient une finesse finale de 60 à 100 µm, mesurée au micromètre, selon la méthode bien connue en chocolaterie.

Au besoin, le chocolat peut ensuite être broyé plus finement pour atteindre des finesses classiques de 15 à 45 µm, de préférence 20 µm environ, par passage sur un broyeur à billes aseptique.

La stérilisation réduit la contamination du Bacillus subtilis utilisé de 4.2 log comparé au chocolat ensemencé de départ.

On retrouve donc un chocolat au lait avec des caractéristiques identiques à celui de départ, mais essentiellement stérile.

### Exemple 10 : Réduction de la flore microbienne de chocolat au lait

Le chocolat de départ a la composition suivante:

| | Chocolat 10 |
|---|---|
| Pâte de cacao | 9.00 |
| Sucre | 35.10 |
| beurre de cacao | 41.15 |
| Lait poudre 0 % MG | 10.40 |
| MGLA | 3.70 |
| Lécithine | 0.30 |
| PGPR | 0.25 |
| Arômes | 0.10 |
| Total | 100.0 |
| MG % / MS | 50 |

Sa teneur en eau est moins de 0.5% et son Aw de 0.3.

Sa contamination naturelle est de 1100 UFC/g dont 86 spores de bactéries aérobies mésophiles (30°C) /g.

On réalise 2 essais : sur le chocolat naturellement contaminé, et sur un chocolat ensemencé en Bacillus subtilis, comme dans l'exemple 9.

Le matériel est identique à l'exemple 9.

On mélange intimement le chocolat à 50°C avec 30% d'eau. On dégaze par mise sous vide (-0.95 bar).

On chauffe rapidement par injection directe de vapeur de qualité alimentaire jusqu'à 95°C et on maintient 8 mn. Puis on chauffe sous pression par injection directe de vapeur de qualité alimentaire jusqu'à 130°C, on arrête l'injection et on maintient le produit 5,5 mn à cette température pour stériliser. L'Aw équivalente du chocolat lors de la stérilisation est 0.95.

On évapore l'eau sous un vide de -0.95 bar en apportant de l'énergie par la double enveloppe, jusqu'à retrouver l'Aw et l'humidité de départ, puis on refroidit à 50°C. Le broyage des agglomérats et cristaux de sucres est identique à l'exemple 9.

La contamination du chocolat naturellement contaminé est <1 UFC/kg, soit une réduction supérieure à 6 log, et notamment supérieure à 4.9 log sur les bactéries sporulées.

La contamination du chocolat artificiellement contaminé avec Bacillus subtilis a été réduite de 6.1 log.

On retrouve donc un chocolat au lait avec des caractéristiques identiques à celui de départ, mais essentiellement stérile. Selon la cinétique de montée en température et d'évaporation, le goût peut être légèrement caramélisé, mais il n'y a pas de goût de brûlé.

### Exemples 11 à 13 : Réduction de la flore microbienne de chocolat noir

Les chocolats de départ ont la composition suivante:

| | Choc 11 | Choc 12 | Choc 13 |
|---|---|---|---|
| Pâte de cacao | 20.00 | 20.00 | 20.00 |
| Sucre | 22.00 | 22.00 | 22.00 |
| beurre de cacao | 57.90 | 57.45 | 57.40 |
| Lécithine | 0 | 0.25 | 0.50 |
| PGPR | 0 | 0.20 | 0 |
| Arômes | 0.10 | 0.10 | 0.10 |
| Total | 100.0 | 100.0 | 100.0 |
| MG % / MS | 69 | 69 | 69 |

Leur teneur en eau est moins de 0.5% et leur Aw <0.40.

Leur contamination naturelle est de 600 UFC/g, dont 61 spores de bactéries aérobies mésophiles (30°C) /g. On réalise les essais suivants, avec le même matériel que dans l'exemple 9.
- On mélange intimement les chocolats 11 et 12 à 50°C avec 3% d'eau.
   On dégaze par mise sous vide (-0.95 bar).
   On chauffe rapidement par injection directe de vapeur de qualité alimentaire jusqu'à 126°C, on arrête l'injection et on maintient le produit 5,5 mn à cette température pour stériliser. L'Aw équivalente du chocolat est 0.82.
   L'évaporation et le broyage sont identiques à l'exemple 9.
   La contamination du chocolat artificiellement contaminé avec Bacillus subtilis a été réduite de plus de 5,3 log. Celle du chocolat naturellement contaminé est < 1 UFC/kg, soit une réduction de 5.8 log, et notamment supérieure à 4.8 log sur les bactéries sporulées.
- On fond le chocolat n°13 à 50°C, sans eau ajoutée. On dégaze par mise sous vide (-0.95 bar).
   On chauffe rapidement par injection directe de vapeur de qualité alimentaire jusqu'à 126 °C, on arrête l'injection et on maintient le produit 5,5 mn à cette température pour stériliser. L'Aw équivalente du chocolat est 0.81.
   L'évaporation et le broyage sont identiques à l'exemple 9.
   La contamination du chocolat artificiellement contaminé avec Bacillus subtilis a été réduite de plus de 4.7 log.
- On mélange intimement le chocolat 12 à 50°C avec 2,5% d'eau.
   On dégaze par mise sous vide (-0.95 bar).
   On chauffe rapidement par double enveloppe jusqu'à 125°C et on maintient le produit 30 mn à cette température pour stériliser.
   L'Aw équivalente du chocolat est 0.70.
   L'évaporation et le broyage sont identiques à l'exemple 9.
   La contamination du chocolat artificiellement contaminé avec Bacillus subtilis a été réduite de plus de 6.3 log.
- On mélange intimement le chocolat 11 à 50°C avec 8% d'eau. On dégaze par mise sous vide (-0.95 bar). On chauffe rapidement par double enveloppe jusqu'à 126°C et on maintient le produit 5.5 mn à cette température pour stériliser. L'Aw équivalente du chocolat est 0.83.
   L'évaporation et le broyage sont identiques à l'exemple 9.
   La contamination du chocolat artificiellement contaminé avec Bacillus subtilis a été réduite de 3.6 log.
- On mélange intimement le chocolat 11 à 50°C avec 3% d'eau. On dégaze par mise sous vide (-0.95 bar) et on chauffe 10 min à 80°C, puis de 20 à 60 min à 37°C pour mieux répartir l'eau dans les particules constituant le chocolat.
   On chauffe rapidement par double enveloppe jusqu'à 145°C et on maintient le produit 3 mn à cette température pour stériliser. L'Aw équivalente du chocolat est 0.73.
   L'évaporation et le broyage sont identiques à l'exemple 9.
   La contamination du chocolat artificiellement contaminé avec Bacillus subtilis a été réduite de 3.5 log.

Pour tous ces essais de l'exemple 11, on retrouve donc un chocolat noir avec des caractéristiques identiques à celui de départ, mais essentiellement stérile. Selon la cinétique de montée en température et d'évaporation le goût peut être légèrement caramélisé.

### Exemple 14 : Réduction de la flore microbienne d'un analogue de chocolat noir

L'analogue de départ a la composition suivante :

| | PAG 14 |
|---|---|
| Poudre de cacao 11 MG | 10.00 |
| Sucre | 22.00 |
| graisse de coco hydrogénée (32°C point de fusion) | 67.35 |
| Lécithine | 0.3 |
| PGPR | 0.25 |
| Arômes | 0.10 |
| Total | 100.0 |
| MG%/MS | 69 |
| PAG : pâte à glacer | |

Sa teneur en eau est moins de 0.5% et l'Aw < 0.40. On réalise l'essai suivant avec le même matériel que dans l'exemple 9 :
- On mélange intimement à 50°C la pâte à glacer PAG14 avec 3 % d'eau. On dégaze par mise sous vide (-0.95 bar).
   On chauffe rapidement par injection directe de vapeur de qualité alimentaire jusqu'à 130°C, on arrête l'injection et on maintient le produit 5 mn à cette température pour stériliser. L'Aw équivalente du chocolat est 0.82.
   L'évaporation et le broyage sont identiques à l'exemple 9.
   La contamination artificielle en Bacillus subtilis a été réduite de plus de 6 log.

## Revendications

1. Procédé de stérilisation d'un produit alimentaire à faible teneur en eau, naturellement ou artificiellement contaminé, **caractérisé en ce que** l'on élève l'activité de l'eau (Aw) dudit produit alimentaire à une valeur supérieure à 0,7, de préférence supérieure à 0,8, **en ce que** l'on soumet le produit alimentaire hydraté à une étape de stérilisation thermique et **en ce que** l'on élimine l'eau de manière à récupérer un produit alimentaire à faible teneur en eau essentiellement stérile, qui présente une contamination, notamment en bactéries sporulées, au moins 1000 fois inférieure (3 log) au produit contaminé de départ, notamment inférieur à 1 UFC/g.

2. Procédé de stérilisation d'un produit alimentaire à faible teneur en eau selon la revendication 1, **caractérisé en ce que** le produit alimentaire de départ présente une activité de l'eau inférieure à environ 0,6 et notamment de l'ordre d'environ 0,4.

3. Procédé de stérilisation d'un produit alimentaire à faible teneur en eau selon les revendications 1 à 2, **caractérisé en ce qu'**on élève l'activité de l'eau (Aw) dudit produit alimentaire à une valeur supérieure à 0,87, notamment 0,9 à 0,96.

4. Procédé de stérilisation d'un produit alimentaire à faible teneur en eau selon les revendications 1 à 3, **caractérisé en ce que** l'on dégaze avant la stérilisation.

5. Procédé de stérilisation d'un produit alimentaire à faible teneur en eau selon l'une des revendications 1 à 4, **caractérisé en ce que** le produit alimentaire de départ est contaminé par les bactéries sporulées.

6. Procédé de stérilisation d'un produit alimentaire à faible teneur en eau selon l'une des revendications 1 à 5, **caractérisé en ce que** le produit alimentaire de départ est choisi dans le groupe constitué par les fruits secs, le sucre ou le chocolat ou un analogue du chocolat.

7. Procédé de stérilisation d'un produit alimentaire à faible teneur en eau selon l'une des revendications 1 à 6, **caractérisé en ce que** le chocolat est du chocolat noir comprenant au moins 30 % de cacao, dont au moins 2,5 % de cacao sec et dégraissé et 5 % au plus de lait en poudre.

8. Procédé de stérilisation d'un produit alimentaire à faible teneur en eau selon la revendication 6, **caractérisé en ce que** le chocolat est du chocolat au lait ou du chocolat blanc.

9. Procédé de stérilisation d'un produit alimentaire à faible teneur en eau selon l'une des revendications 6 à 8, **caractérisé en ce que** l'activité de l'eau du chocolat ou analogue est élevée à une valeur supérieure à environ 0,87 par malaxage d'un chocolat ou analogue contenant environ moins de 28% en poids de matière grasse ou par malaxage d'un chocolat ou analogue contenant environ plus de 48 % en poids de matière grasse avec une phase aqueuse de façon à obtenir une pâte homogène.

10. Procédé de stérilisation d'un produit alimentaire à faible teneur en eau selon l'une des revendications 6 à 8, **caractérisé en ce que** l'activité de l'eau du chocolat ou analogue est élevée à une valeur supérieure à environ 0,87 par malaxage d'un chocolat ou analogue avec une émulsion eau-dans-l'huile, formée d'eau, de matière grasse et d'un émulsifiant.

11. Procédé de stérilisation d'un produit alimentaire à faible teneur en eau selon les revendications 1 à 10, **caractérisé en ce que** l'on stérilise sous pression, en chauffant de préférence par injection directe de vapeur de qualité alimentaire depuis une température initiale de 40 à 95°C jusqu'à la température de stérilisation.

12. Procédé de stérilisation d'un produit alimentaire à faible teneur en eau selon les revendications 1 à 11, **caractérisé en ce que** l'on soumet le produit hydraté et éventuellement dégazé, à une attente avant la stérilisation pendant 8 à 80 mn à une température pouvant varier de 30 à 95°C, cette étape pouvant avoir lieu sous pression.

13. Procédé de stérilisation d'un produit alimentaire à faible teneur en eau selon les revendications 1 à 12, **caractérisé en ce que** les étapes de stérilisation et séchage sont réalisées par batch dans la même cuve.

14. Procédé de stérilisation d'un produit alimentaire à faible teneur en eau selon l'une des revendications 1 à 13, **caractérisé en ce que** le produit alimentaire hydraté est stérilisé par chauffage à une température comprise entre 100 °C et 150 °C pendant un temps approprié, notamment entre 1 et 10 minutes.

15. Procédé de stérilisation d'un produit alimentaire à faible teneur en eau selon l'une des revendications 1 à 14, **caractérisé en ce que** l'eau du produit alimentaire hydraté stérilisé est éliminée sous vide.

16. Produit alimentaire issu d'un produit alimentaire à faible teneur en eau contaminé par des microorganismes, **caractérisé en ce qu'**il est essentiellement stérile, **en ce qu'**il est susceptible d'être obtenu par le procédé selon l'une des revendications 1 à 15 et **en ce qu'**il présente une contamination, notamment en bactéries sporulées, au moins 1000 fois inférieure audit produit alimentaire contaminé de départ, inférieure à 1 UFC/g.

17. Produit alimentaire selon la revendication 16, **caractérisé en ce qu'**il est choisi dans le groupe comprenant le chocolat et les analogues de chocolat.

18. Produit alimentaire selon la revendication 17, **caractérisé en ce qu'**il consiste en un chocolat ou analogue contenant plus de 48% de matière grasse.

19. Produit alimentaire essentiellement stérile selon la revendication 17, **caractérisé en ce qu'**il consiste en du chocolat ou un analogue du chocolat comprenant en pourcentage en poids :
- cacao sec et dégraissé 0 à 35 %
- beurre de cacao ou matière grasse 20 à 90 %
- sucre ou analogue 10 à 65 %
- lait en poudre écrémé ou non 0 à 30 %.

20. Produit alimentaire essentiellement stérile selon la revendication 17, **caractérisé en ce que** lorsque ledit chocolat ou analogue contient moins d'environ 28 % de matière grasse, de la matière grasse stérile en quantité appropriée y est ensuite éventuellement incorporée après stérilisation.

21. Composition alimentaire **caractérisée en ce qu'**elle est formée d'une phase aqueuse, notamment une base laitière, et de produits alimentaires stériles, notamment de morceaux de chocolat ou analogue, selon l'une des revendications 16 à 20, notamment 1 à 30 % par rapport à la base laitière.

22. Composition alimentaire selon la revendication 21, **caractérisée en ce que** les produits alimentaires solides sont des morceaux de chocolat ou analogue dont la plus grande dimension est supérieure à 4 mm.

23. Composition alimentaire selon la revendication 21 ou 22, **caractérisée en ce que** la phase aqueuse est à pH neutre ou faiblement acide et présente une activité de l'eau supérieure à 0,8, de préférence supérieure à 0,85.

24. Composition alimentaire selon la revendication 23, **caractérisée en ce qu'**elle est constituée d'une crème dessert à pH "neutre".

25. composition alimentaire selon la revendication 23, **caractérisée en ce qu'**elle est constituée d'une mousse à pH "neutre".

## Patentansprüche

1. Verfahren zur Sterilisation eines Nahrungsmittelerzeugnisses mit niedrigem Wassergehalt, welches von Natur aus oder künstlich verunreinigt ist, **dadurch gekennzeichnet, dass** man die Aktivität des Wassers (Aw) des Nahrungsmittelerzeugnisses auf einen Wert über 0,7, vorzugsweise über 0,8 erhöht, dass man das hydratisierte Nahrungsmittelerzeugnis einem Schritt einer Hitzesterilisation unterwirft und dass man das Wasser daraus derart entfernt, dass ein im wesentlichen steriles Nahrungsmittelerzeugnis mit niedrigem Wassergehalt zurückgewonnen wird, welches eine Verunreinigung, insbesondere mit Sporen bildenden Bakterien, welche wenigstens 1000-fach geringer ist (3 log) als bei dem verunreinigten Ausgangserzeugnis, insbesondere unter 1 UFC/g aufweist.

2. Verfahren zur Sterilisation eines Nahrungsmittelerzeugnisses mit niedrigem Wassergehalt nach Anspruch 1, **dadurch gekennzeichnet, dass** das als Ausgangspunkt dienende Nahrungsmittelerzeugnis eine Aktivität des Wassers unter ungefähr 0,6 und insbesondere in der Größenordnung von ungefähr 0,4 aufweist.

3. Verfahren zur Sterilisation eines Nahrungsmittelerzeugnisses mit niedrigem Wassergehalt nach den Ansprüchen 1 bis 2, **dadurch gekennzeichnet, dass** man die Aktivität des Wassers (Aw) des Nahrungsmittelerzeugnisses auf einen Wert über 0,87, insbesondere 0,9 bis 0,96 erhöht.

4. Verfahren zur Sterilisation eines Nahrungsmittelerzeugnis- ses mit niedrigem Wassergehalt nach den Ansprüchen 1 bis 3, **dadurch gekennzeichnet, dass** man dieses vor der Sterilisation entgast.

5. Verfahren zur Sterilisation eines Nahrungsmittelerzeugnisses mit niedrigem Wassergehalt nach einem der Ansprüche 1 bis 4, **dadurch gekennzeichnet, dass** das als Ausgangpunkt dienende Nahrungsmittelerzeugnis durch Sporen bildende Bakterien verunreinigt ist.

6. Verfahren zur Sterilisation eines Nahrungsmittelerzeugnisses mit niedrigem Wassergehalt nach einem der Ansprüche 1 bis 5, **dadurch gekennzeichnet, dass** das als Ausgangspunkt dienende Nahrungsmittelerzeugnis aus der aus Dörrobst, Zucker oder Schokolade oder einem Analog von Schokolade gebildeten Gruppe ausgewählt wird.

7. Verfahren zur Sterilisation eines Nahrungsmittelerzeugnisses mit niedrigem Wassergehalt nach einem der Ansprüche 1 bis 6, **dadurch gekennzeichnet, dass** die Schokolade dunkle Schokolade ist, welche wenigstens 30% Kakao, davon wenigstens 2,5% trockenen und entfetteten (entölten) Kakao, und höchstens 5% Milchpulver enthält.

8. Verfahren zur Sterilisation eines Nahrungsmittelerzeugnisses mit niedrigem Wassergehalt nach Anspruch 6, **dadurch gekennzeichnet, dass** die Schokolade Milchschokolade oder weiße Schokolade ist.

9. Verfahren zur Sterilisation eines Nahrungsmittelerzeugnisses mit niedrigem Wassergehalt nach einem der Ansprüche 6 bis 8, **dadurch gekennzeichnet, dass** die Aktivität des Wasser der Schokolade oder des Analogs auf einen Wert über ungefähr 0,87 durch Kneten einer Schokolade oder eines Analogs, welche(s) weniger als ungefähr 28 Gew.-% Fett enthält, oder durch Kneten einer Schokolade oder eines Analogs, welche(s) mehr als ungefähr 48 Gew.-% Fett enthält, mit einer wässrigen Phase erhöht wird derart, dass eine homogene Masse erhalten wird.

10. Verfahren zur Sterilisation eines Nahrungsmittelerzeugnisses mit niedrigem Wassergehalt nach einem der Ansprüche 6 bis 8, **dadurch gekennzeichnet, dass** die Aktivität des Wassers der Schokolade oder des Analogs auf einen Wert über ungefähr 0,87 erhöht wird durch Kneten einer Schokolade oder eines Analogs mit einer Wasser-in-Öl-Emulsion, welche aus Wasser, Fett und einem Emulgiermittel gebildet wird.

11. Verfahren zur Sterilisation eines Nahrungsmittelerzeugnisses mit niedrigem Wassergehalt nach den Ansprüchen 1 bis 10, **dadurch gekennzeichnet, dass** man dieses unter Druck sterilisiert, indem man vorzugsweise durch direkte Injektion von Dampf von Lebensmittelqualität ausgehend von einer Anfangstemperatur von 40 bis 95°C bis auf die Sterilisationstemperatur erwärmt.

12. Verfahren zur Sterilisation eines Nahrungsmittelerzeugnisses mit niedrigem Wassergehalt nach den Ansprüchen 1 bis 11, **dadurch gekennzeichnet, dass** man das hydratisierte und gegebenenfalls entgaste Erzeugnis vor der Sterilisation einer Wartezeit während 8 bis 80 min bei einer Temperatur, welche von 30 bis 95°C variieren kann, unterwirft, wobei dieser Schritt unter Druck stattfinden kann.

13. Verfahren zur Sterilisation eines Nahrungsmittelerzeugnisses mit niedrigem Wassergehalt nach den Ansprüchen 1 bis 12, **dadurch gekennzeichnet, dass** die Schritte der Sterilisation und der Trocknung chargenweise in demselben Behälter ausgeführt werden.

14. Verfahren zur Sterilisation eines Nahrungsmittelerzeugnisses mit niedrigem Wassergehalt nach einem der Ansprüche 1 bis 13, **dadurch gekennzeichnet, dass** das hydratisierte Nahrungsmittelerzeugnis durch Erwärmen auf eine Temperatur zwischen 100°C und 150°C während einer geeigneten Zeitspanne, insbesondere zwischen 1 und 10 min, sterilisiert wird.

15. Verfahren zur Sterilisation eines Nahrungsmittelerzeugnisses mit niedrigem Wassergehalt nach einem der Ansprüche 1 bis 14, **dadurch gekennzeichnet, dass** das Wasser des sterilisierten hydratisierten Nahrungsmittelerzeugnisses unter Vakuum entfernt wird.

16. Nahrungsmittelerzeugnis, welches aus einem Nahrungsmittelerzeugnis mit niedrigem Wassergehalt, welches durch Mikroorganismen verunreinigt ist, hervorgeht, **dadurch gekennzeichnet, dass** es im wesentlichen steril ist, dass es durch das Verfahren nach einem der Ansprüche 1 bis 15 erhalten werden kann und dass es eine Verunreinigung, insbesondere mit Sporen bildenden Bakterien, welche wenigstens 1000-fach geringer als bei dem als Ausgangspunkt dienenden verunreinigten Nahrungsmittelerzeugnis ist, unter 1 UFC/g aufweist.

17. Nahrungsmittelerzeugnis nach Anspruch 16, **dadurch gekennzeichnet, dass** es ausgewählt wird in der Gruppe, welche Schokolade und die Analog von Schokolade umfasst.

18. Nahrungsmittelerzeugnis nach Anspruch 17, **dadurch gekennzeichnet, dass** es aus einer Schokolade oder einem Analog besteht, welche(s) mehr als 48% Fett enthält.

19. Im wesentlichen steriles Nahrungsmittelerzeugnis nach Anspruch 17, **dadurch gekennzeichnet, dass** es aus Schokolade oder einem Analog von Schokolade besteht, welche(s) in Gewichtsprozent umfasst:
- trockenen und entfetteten (entölten) Kakao 0 bis 35%
- Kakaobutter oder Fett 20 bis 90%
- Zucker oder Analog 10 bis 65%
- entrahmtes oder nicht-entrahmtes Milchpulver 0 bis 30%.

20. Im wesentlichen steriles Nahrungsmittelerzeugnis nach Anspruch 17, **dadurch gekennzeichnet, dass**, wenn die Schokolade oder das Analog weniger als ungefähr 28% Fett enthält, nach der Sterilisation dann gegebenenfalls steriles Fett in einer geeigneten Menge in diese(s) eingearbeitet wird.

21. Nahrungsmittelzusammensetzung, **dadurch gekennzeichnet, dass** sie aus einer wässrigen Phase, insbesondere einer Milchgrundlage, und sterilen Nahrungsmittelerzeugnissen, insbesondere Stükken von Schokolade oder einem Analog, nach einem der Ansprüche 16 bis 20, insbesondere 1 bis 30% bezogen auf die Milchgrundlage, gebildet wird.

22. Nahrungsmittelzusammensetzung nach Anspruch 21, **dadurch gekennzeichnet, dass** die festen Nahrungsmittelerzeugnisse Stücke von Schokolade oder einem Analog sind, deren größte Abmessung über 4 mm beträgt.

23. Nahrungsmittelzusammensetzung nach Anspruch 21 oder 22, **dadurch gekennzeichnet, dass** die wässrige Phase einen neutralen oder schwach sauren pH aufweist und eine Aktivität des Wassers über 0,8, vorzugsweise über 0,85 aufweist.

24. Nahrungsmittelzusammensetzung nach Anspruch 23, **dadurch gekennzeichnet, dass** sie aus einem Cremedessert mit "neutralem" pH gebildet wird.

25. Nahrungsmittelzusammensetzung nach Anspruch 23, **dadurch gekennzeichnet, dass** sie aus einem Schaum mit "neutralem" pH gebildet wird.

## Claims

1. Process for sterilizing a naturally or artificially contaminated food product with a low water content, **characterized in that** the water activity (A_{w}) of said food product is raised to a value of more than 0.7, preferably more than 0.8, **in that** the hydrated food product undergoes a thermal sterilization step and **in that** water is eliminated so as to recover an essentially sterile food product with a low water content with a contamination, in particular of sporulated bacteria, at least 1000 times (3 log) lower than the contaminated starting product, in particular less than 1 CFU/g.

2. Process for sterilizing a food product with a low water content according to Claim 1, **characterized in that** the water activity of the starting food product is less than about 0.6, in particular of the order of about 0.4.

3. Process for sterilizing a food product with a low water content according to Claims 1 and 2, **characterized in that** the water activity (A_{w}) of said food product is raised to a value of more than 0.87, in particular 0.9 to 0.96.

4. Process for sterilizing a food product with a low water content according to Claims 1 to 3, **characterized in that** degassing is carried out prior to sterilization.

5. Process for sterilizing a food product with a low water content according to one of Claims 1 to 4, **characterized in that** the starting food product is contaminated with sporulated bacteria.

6. Process for sterilizing a food product with a low water content according to one of Claims 1 to 5, **characterized in that** the starting food product is selected from the group formed by dry fruits, sugar, or chocolate or a chocolate analogue.

7. Process for sterilizing a food product with a low water content according to one of Claims 1 to 6, **characterized in that** the chocolate is dark chocolate comprising at least 30% cocoa, including at least 2.5% dry defatted cocoa and at most 5% powdered milk.

8. Process for sterilizing a food product with a low water content according to Claim 6, **characterized in that** the chocolate is milk chocolate or white chocolate.

9. Process for sterilizing a food product with a low water content according to one of claims 6 to 8, **characterized in that** the water activity of the chocolate or chocolate analogue is raised to a value of more than about 0.87 by mixing a chocolate or chocolate analogue containing less than about 28% by weight of fat, or by mixing a chocolate or chocolate analogue containing more than about 48% by weight of fat, with an aqueous phase to obtain a homogeneous paste.

10. Process for sterilizing a food product with a low water content according to one of Claims 6 to 8, **characterized in that** the water activity of the chocolate or chocolate analogue is raised to a value of more than about 0.87 by mixing a chocolate or chocolate analogue with a water-in-oil emulsion formed from water, fat and an emulsifying agent.

11. Process for sterilizing a food product with a low water content according to Claims 1 to 10, **characterized in that** it is sterilized under pressure, preferably by heating by direct injection of food-grade steam from an initial temperature in the range of 40ºC to 95ºC to the sterilization temperature.

12. Process for sterilizing a food product with a low water content according to Claims 1 to 11, **characterized in that** prior to sterilization, the hydrated and optionally degassed product is held for 8 minutes to 80 minutes at a temperature in the range of 30ºC to 95ºC, this step possibly taking place under pressure.

13. Process for sterilizing a food product with a low water content according to Claims 1 to 12, **characterized in that** the sterilization and drying steps are carried out as a batch process in the same vessel.

14. Process for sterilizing a food product with a low water content according to one of Claims 1 to 13, **characterized in that** the hydrated food product is sterilized by heating to a temperature in the range of 100ºC to 150ºC for a suitable period, in particular in the range of 1 minute to 10 minutes.

15. Process for sterilizing a food product with a low water content according to one of Claims 1 to 14, **characterized in that** the water is eliminated from the sterilized hydrated food product under vacuum.

16. Food product originating from a food product with a low water content contaminated by micro-organisms, **characterized in that** it is essentially sterile, **in that** it can be obtained by the process according to one of Claims 1 to 15, and **in that** its contamination, particularly in sporulated bacteria, is at least 1000 times lower than said starting contaminated food product, less than 1 CFU/g.

17. Food product according to Claim 16, **characterized in that** it is selected from the group formed by chocolate and chocolate analogues.

18. Food product according to Claim 17, **characterized in that** it consists of a chocolate or chocolate analogue containing more than 48% fat.

19. Essentially sterile food product according to Claim 17, **characterized in that** it consists of chocolate or a chocolate analogue comprising, as a percentage by weight:
• dry and defatted cocoa 0 to 35%
• cocoa butter or fat 20% to 90%
• sugar or the like 10% to 65%
• powdered milk, skimmed or otherwise 0 to 30%.

20. Essentially sterile food product according to Claim 17, **characterized in that** when said chocolate or chocolate analogue contains less than about 28% fat, sterile fat is optionally incorporated therein in a suitable quantity after sterilization.

21. Food composition, **characterized in that** it is formed from an aqueous phase, in particular a milk base, and from sterile food products, in particular pieces of chocolate or chocolate analogue, according to one of claims 16 to 20, in particular 1% to 30% with respect to the milk base.

22. Food composition according to Claim 21, **characterized in that** the solid food products are pieces of chocolate or chocolate analogue, the largest dimension of which is more than 4 mm.

23. Food composition according to Claim 21 or 22, **characterized in that** the aqueous phase is at a neutral or weakly acidic pH and has a water activity of more than 0.8, preferably more than 0.85.

24. Food composition according to Claim 23, **characterized in that** it consists of a dessert cream with a "neutral" pH.

25. Food composition according to Claim 23, **characterized in that** it consists of a mousse with a "neutral" pH.
